# EUROPEAN PATENT SPECIFICATION

(11) **EP 0 897 635 B1**
(45) Date of publication and mention of the grant of the patent: **24.03.2010**
(21) Application number: 97926424.9
(22) Date of filing: 07.05.1997
(51) Int. Cl.: H04N 5/913

(54) **METHOD AND APPARATUS FOR MODIFICATIONS MADE TO A VIDEO SIGNAL TO INHIBIT THE MAKING OF ACCEPTABLE VIDEOTAPE RECORDINGS**
VERFAHREN UND ANLAGE ZUR MODIFIZIERUNG EINES VIDEOSIGNALS UM DIE HERSTELLUNG AKZEPTABLER VIDEOBANDAUFNAHMEN ZU UNTERBINDEN
PROCEDE ET APPAREIL CORRESPONDANT PERMETTANT DE MODIFIER UN SIGNAL VIDEO AFIN D'EMPECHER LA FORMATION D'ENREGISTREMENTS ACCEPTABLES SUR PISTE MAGNETIQUE

(30) Priority: 08.05.1996 US 17859 P
(43) Date of publication of application: 24.02.1999
(73) Proprietor: MACROVISION CORPORATION, Santa Clara, CA 95050 (US)
(72) Inventor: RYAN, John, O., Cupertino, CA 95014 (US)
(74) Representative: Needle, Jacqueline
(86) International application number: PCT/US1997/007790
(87) International publication number: WO 1997/042755

(56) References cited:
- WO-A-96/31878
- US-A- 4 163 253
- US-A- 4 475 129
- US-A- 4 577 216
- US-A- 4 631 603
- US-A- 4 819 098
- US-A- 5 130 810
- US-A- 5 134 496
- US-A- 5 251 041
- US-A- 5 394 470
- US-A- 5 481 608
- US-A- 5 583 936
- US-A- 5 585 929

## Description

This invention relates to a method and apparatus for processing a video signal to inhibit the making of acceptable videotape recordings.

There exists a need for a method and system for modifying a video signal so that the signal produces a normal colour picture on a television receiver, but a videotape recording of the video signal is inhibited or prevented.

Some of the early work resulted in methods which are not satisfactory. For example, US Patent No. 4, 163, 253 ("'253") describes an arrangement in which a positive pulse is added to the back porch portion of each horizontal blanking interval. This approach results in significant playability problems. In this respect, video cassette recorders designed for the consumer market place invariably feature some form of automatic gain control circuitry (AGC). The AGC circuit ensures that the video level applied to the FM modulator in the recording system remains at a fixed, predetermined value, even if the video level applied to the machine's input terminal varies widely about the nominal value. Without an AGC system, high level signals would be distorted and clipped and low level signals would be marred by the noise and interference products generated by the recording process. If the input level dropped to less than 1/3 of normal value, the replayed signal might not even be strong enough to reliably synchronize the receiver's timbales, hence giving rise to noisy unstable pictures. This early system, however, did not take into consideration the fact that many television monitor/receivers use the back portion region of a video signal for black-level clamping. The result is that while the approach described in '253 patent of confusing the AGC of a video cassette recorder does result in a copied tape being generally unviewable, the video signal also does not provide viewable pictures on many television monitor/receivers when it is used directly. This makes the process of limited value.

US patent number 4, 475, 129 ("'129") generates a first pulse in the back porch of a horizontal blanking signal with a width narrower than the back porch and adding a second pulse substantially equal to the first pulse. These pulses are added to the back porch at predetermined time intervals. The approach used in '129 has many of the same problems as '253. The effectiveness of the copy protection does result in a copies tape being generally unviewable but the video signal does not provide viewable pictures on many television monitors/receives when it is used directly. This makes the process of low commercial value.

More recent and more successful approaches to preventing the unauthorised recording of a video signal have been described in US Patent Nos. 4,577,216, 4,613,603 and 4,819,098. In addition to these, US Patent No. 5,583,986 discloses background material to the present invention.

US Patent Nos. 4,631, 603 ("'603") and 4,819,098 ("'098") are similar to '253 in that they rely on confusing the AGC of a video cassette recorder. They differ from '253, however, in a major aspect. As in '253, they rely on differences between a video cassette recorder and a television receiver to assure that while the modifications made to a video signal prevent copying by a video cassette recorder, they do not significantly affect the playability of such signal on a conventional television monitor/receiver. The '098 patent uses a different approach for modifying a composite video signal to confuse the AGC of a video cassette recorder as described above, while not materially affecting the playability of the resulting signal. That is, it has been found that by "clustering" during a field the modifications to a composite video signal responsible for confusing the AGC circuitry of a video cassette recorder, the effect of such modification on the playability of the video signal on a television receiver/monitor is significantly attenuated. Most desirably, the modifications of the signal take place during that portion thereof which is responsible for vertical blanking, i.e., the return of a beam sweep from the end of a raster scan filed to the beginning. The video signal does not provide during such time a viewable portion of a video picture, with the result that any effect of the modifications to the video signal on the circuitry of a television receiver/monitor will not occur during a viewing interval. Thus, the deleterious affect on playability is virtually eliminated. While the '098 patent provides a very useful copy protection means, the "clustering" must be done carefully to balance between the effectiveness of the copy protection and the playability of the original signal.

A recent approach includes an embodiment, wherein the video level of the back porch area is lowered below the normal blanking level. This reduction has the effect of increasing the gain of the AGC system so as to cause the recorded picture to be brighter than normal and have a washed out look. This reduction of blanking level in the back porch area is not accompanied by an AGC pulse.

One of the elements described in US Patent No. 5,583,986 includes the concept of horizontal sync narrowing so that when an illegal copy is made, the attenuated video with reduced sync pulse width (duration) causes a playability problem when viewed on a TV set.

The previous described methods sometimes cause disturbance in the control of video signals by removing the sync pulse from selected lines. To cause further disturbance, a pulse is added after the colour synchronization signal to enhance deterioration of the image quality.

It is an object of the present invention to maintain the effectiveness of the copy protection while improving the playability of the television signal.

According to the present invention, there is provided a method for processing a video signal so as to inhibit the making of acceptable video tape recordings therefrom while at the same time producing a substantially normal picture on a television monitor/receiver, wherein the video signal has sync pulses followed by back porch intervals, the method comprising the steps of:
selecting one or more lines within said video signal;
narrowing the width of the sync pulse on said selected lines;
lowering the level of each of a first portion and a third portion of the back porch interval on said selected lines by less than half of the colour burst amplitude;
significantly raising the level of a second portion of the back porch interval on said selected lines;
wherein the average level of the video signal during the lowered and raised portions is approximately equal to the blanking level of the back porch;
retaining the normal position of the colour burst relative to the leading edge of the sync pulses;
wherein the second portion has a pulse width wide enough to overcome the limited bandwidth of a video recorder; and
a sufficient number of lines are selected to inhibit the making of acceptable video tape recordings therefrom.

In an embodiment of the invention the voltage amplitudes of a portion of the back porch intervals following the trailing edges of a substantial number of sync pulses are significantly raised and lowered to improve the playability of the original signal without reducing the effectiveness of the copy protection of the copied signal. This is achieved most simply by adding pulses to selected lines of the video signal during the back porch interval, which pulses significantly raise and lower the voltage amplitude during the blanking interval so to provide a signal the average value of which is approximately equal to the blanking level. It is also possible for the sync level and the sync duration on the selected lines to be reduced.

Preferably, the positive portion has a duration of between 0.5 and 5 microseconds and more preferably is at least 750 nanoseconds wide. Furthermore, the positive portion has an amplitude of approximately peak white or greater and more preferably of 127 IRE units.

In a preferred embodiment, the selected lines comprise the lines containing the colour burst signal and the last 6 lines preceding a vertical sync pulse in each field.

Preferably, the colour burst signal begins approximately 5.6 µsecs after the leading edge of the horizontal sync pulse and the colour burst signal duration is approximately 2.25 µsecs.

Preferably, the sync duration on selected lines is approximately 3.0 µsecs and the sync amplitude is reduced to approximately -30 IRE units.

More preferably, the selected lines form a duster adjacent to a vertical blanking interval that form picture elements that are not displayed.

Preferably, the method further comprises the step of reducing the level of each sync pulse and selected lines are within a group thereof which occurs within no more than generally 20% of the video signal responsible for a field of a frame.

According to a further aspect of the present invention, an apparatus for processing a video signal so as to inhibit the making of acceptable video tape recordings therefrom while at the same time producing a substantially normal picture on a television monitor/receiver, wherein video lines of the video signal have sync pulses followed by back porch intervals, wherein the apparatus comprises:
a line counter for selecting one or more lines within said video signal;
a logic circuit responsive to the line counter for:
   narrowing the width of the sync pulses on selected lines;
   lowering the level of each of a first portion and a third portion of the back porch interval on said selected lines by less than half of the colour burst amplitude;
   significantly raising the level of a second portion of the back porch interval;
wherein the average level of the video signal during the lowered and raised portions is approximately equal to the blanking level of the back porch;
retaining the normal position of the colour burst relative to the leading edge of said sync pulses,
wherein the second portion is arranged to have a pulse width wide enough to overcome the limited video band width of a video recorder; and
the line counter is arranged to select a sufficient number of lines to inhibit the making of acceptable video tape recording therefrom.

Preferably, the apparatus further comprises a sync separating circuit for separating the sync pulses from the video signals.

More preferably, the apparatus further comprises a sync stripping circuit for removing a sync pulse of normal width from the video signal; and an adder for inserting a narrowed sync pulse in place of the sync pulse of normal width.

Embodiments of the present invention will hereinafter be described, by way of example, with reference to the accompanying drawings, in which:
Figure 1 is an illustration of that portion of the waveform of a typical colour video signal responsible for one horizontal trace and return;
Figure 2 is a block diagram of a typical automatic gain control circuit of a videotape recorder;
Figure 3 illustrates a portion of a composite video signal waveform as modified in accordance with the invention; and
Figure 4 is a block diagram of typical circuitry modifying a video signal waveform to produce waveform of Figure 3.

It is known that by modifying certain characteristics of a video signal, the automatic gain control circuits in a videotape recorder can be forced to behave as if the video signal was much larger than it actually is. The result is that when the signal is recorded on tape, the recording is at such a low level that on replay a television monitor/receiver produces noisy unstable pictures. It has been discovered that by controlling the modifications to have an average value approximately equal to the blanking level while having peak levels both positive and negative of substantial values the effect of the copy protection modifications on the black-level control circuitry of a television monitor/receiver is minimized. Having these modifications inserted in a controlled fashion during the horizontal blanking interval, from a viewer's standpoint the effect is virtually eliminated.

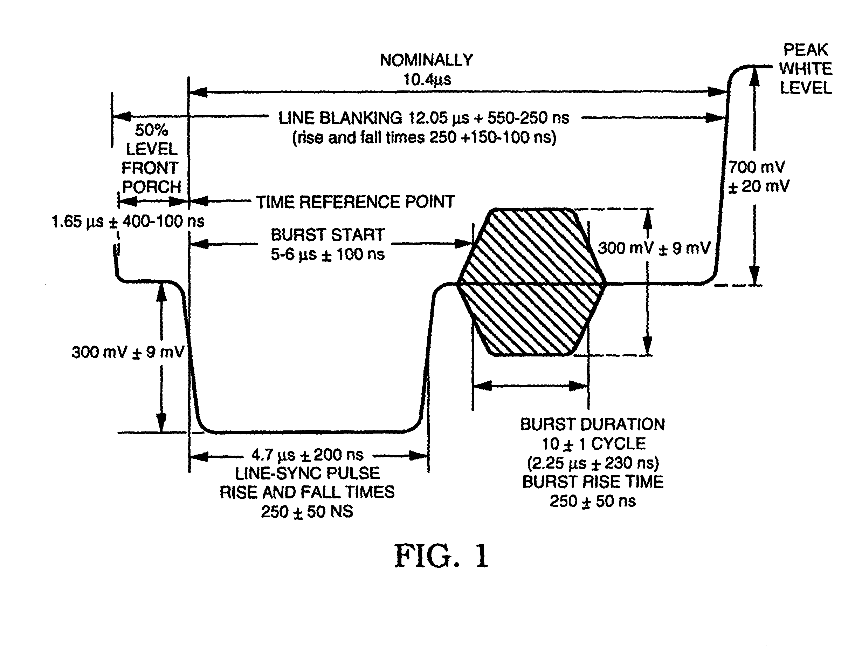

Turning now to Figure 1, the waveform of that portion of a typical colour video signal responsible for one horizontal scan trace and return is illustrated. The only two features of this waveform portion which remain constant despite changes in picture content are those which occur during the blanking intervals, notably the sync pulses and colour burst. Because the level of the colour burst is highly dependent upon tuner response, the level of the sync pulses (any of the pulses which go from blanking level to a sync tip level, including equalizing pulses and vertical sync pulses) are almost always used as the reference level in automatic gain control systems of videotape recorders. Synch pulses are also almost always used as a reference level in the black-level control systems of television monitors/receivers, as well.

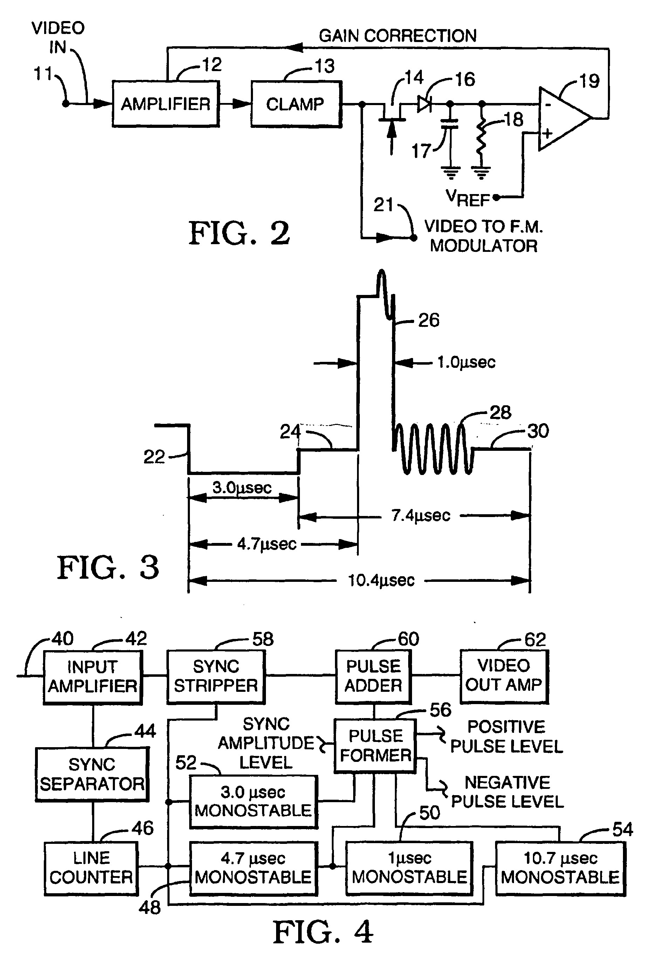

Referring now to Figure 2, a typical automatic gain or level control system as utilized in videotape recorders is illustrated. In the typical system illustrated in Figure 2, a video in signal at a terminal 11 passes through an amplifier 12 and to a sync-tip clamp or DC restorer circuit 13, which establishes the sync tip voltage at some value V1. A sampling circuit consisting of a transistor switch 14 and a positive peak detector, including diode 16, capacitor 17, and resistor 18, measures the voltage of the video signal just after the trailing edge of the sync pulse to yield a voltage V2. The difference voltage (V2--V1) is a measure of the sync pulse level. A differential amplifier 19 compares this sync pulse voltage with a referenced voltage V_{REF}, and generates at its output an error or gain correction signal which is coupled back to the amplifier 12. This negative feedback arrangement ensures that the signal level of the video signal applied to an FM modulator input at terminal 21 remains constant at the signal level value chosen by the designer of the circuit.

Turning now to a consideration of Figure 3, there is illustrated a portion of a waveform of a video signal modified in accordance with one embodiment of the present invention. The waveform portion illustrated in Figure 3 is a portion of a video signal during horizontal blanking. Referring to Figure 3, it can be seen that a positive pulse 26 has been added to the video signal immediately following the trailing edge of a sync pulse 22. For maximum effect, the amplitude of this pulse should be such as to raise the back porch voltage to the level of peak white or greater as shown in Figure 3. A typical value of this positive pulse would be 127 IRE units in the NTSC format. The pulse width of the positive pulse should be wide enough to overcome the limited video bandwidth of the recording video cassette recorder so as to be effective. This pulse should be at least 750 nsecs, for best effectiveness. This positive pulse causes the automatic gain control circuit in a videotape recorder to assess the sync pulse level at about 3½ times its actual value. The feedback action of the automatic gain control circuit as discussed in connection with Figure 2 will then reduce the signal at the FM modulator input to about 30% of the correct value in the ideal case. The replayed signal as recorded on the videotape recorder will, therefore, be well below normal level and have a poor signal/noise ratio. In many cases the signal will not be strong enough on replay to properly synchronize a television monitor/receivers' scanning circuit.

Immediately before and following the positive going pulse are negative going pulses 24, 30 in which the total area is approximately equal to the area under the positive going pulse 26. The width of sync has been reduced in order to provide a larger portion of the back porch area to be used for the negative pulse prior to and following the positive pulse. The sync narrowing is such that the narrowed sync pulse is approximately 3.0 µsecs. The amplitude of the negative going pulse is less than the half the colour burst amplitude so as to avoid placing the burst signal below the sync level. The level of this negative going pulse may be below the slice threshold of the sync separator of the recording VCR This slice threshold is discussed in detail in US 5,194,965. If this negative going pulse is greater than the slice threshold it may improve the effectiveness of the copy protection. This is because the recording VCR may observe this as a pseudo sync pulse.

The purpose of having the negative going pulse is to improve the playability of the original signal on a television monitor receiver. As discussed above, a recording video cassette recorder detects the peak values of the sync and the pulse following the sync signal. However, a monitor/receiver tends to detect the average value of the area following the sync pulse, colloquially called the back porch. Since the area within the back porch comprises positive and negative pulses in which the area under the curves are approximately equal, the darkening effect caused by having only a positive going signal is significantly reduced in most television monitor/receivers.

For maximum effectiveness, the pulse pairs described above may be placed on all horizontal blanking intervals other than those within the vertical sync area. However, it may be desirable to determine a balance between effectiveness and playability by controlling the number of lines having the modifications. One such possibility is to place lines containing the modification in clusters of at least one line various parts of the field.

The above description has used parameters from the NTSC/60 field format. However, the principles of the invention may be equally applied to PAL, SECAM and other 50 field formats.

Turning now to Figure 4, there is shown a block diagram of typical apparatus which can be utilized to practice the method of the present invention as described above in connection with Figure 3. It should be understood that many different kinds of circuit arrangements are possible to produce the modified signal, and the embodiment described in connection with the block diagram of Figure 4 is exemplary only.

Referring to Figure 4, an incoming video signal at a terminal 40 is applied to an input amplifier 42. The output of input amplifier 42 is coupled to sync separator 44 where the synchronizing pulses are separated from the video signal. The output of sync separator 44 is coupled to line counter 46 which is preprogrammed to determine which lines in a field are to be modified. The output of line counter 46 is coupled to sync stripper 58 and monostables 52, 48, and 54. Monostables 52, 48, 50 and 54 determine the pulse width of the various portions of the modified signal including the width of sync, and the positive and negative pulses as shown in Figure 3. The outputs of monostables 52, 48, 50 and 54 are coupled to pulse former 56 which produces the pulse described in Figure 3. These pulses are coupled to pulse adder 60 which receives a video signal that has been stripped of the synchronizing pulses on the selected lines. The colour burst in the original signal remains intact at the input of pulse adder 60. Pulse adder adds the pulses formed in pulse former 56 to the video signal. In the area where a pulse from pulse adder 56 and colour burst coexist, they are simply added as shown in Figure 3. The amplitudes of the positive pulse, the negative pulse and sync on the selected lines is determined in the pulse former as shown. The modified signal is coupled to video output amplifier 62.

What has been described is a method along with exemplary apparatus for modifying a video signal so that a television receiver produces a normal picture from the modified signal, whereas a videotape recording of this signal produces generally unacceptable pictures. Many different forms of apparatus and circuits are possible for practising the method of this invention, and the particular circuitry illustrated in Figure 4 is by way of example only.

The parameters discussed above have been related to the NTSC television system. One skilled in the art could readily apply the principles of the invention the PAL and SECAM standards.

It will be appreciated that variations in, and modifications to, the embodiments disclosed and illustrated may be made within the scope of the appended claims. For example the duration of the added pulse may be set within a wide range of duration (0.5 to 5 microseconds). The amplitude of this pulse also may be varied and it may be of a shape other than rectangular, such as sine squared.

## Claims

1. A method for processing a video signal so as to inhibit the making of acceptable video tape recordings therefrom while at the same time producing a substantially normal picture on a television monitor/receiver, wherein the video signal has sync pulses followed by back porch intervals, the method comprising the steps of:
selecting one or more lines within said video signal;
narrowing the width of the sync pulse (22) on said selected lines;
lowering the level of each of a first portion (24) and a third portion (30) of the back porch interval on said selected lines by less than approximately half of the colour burst amplitude;
significantly raising the level of a second portion (26) of the back porch interval on said selected lines;
wherein the average level of the video signal during the lowered (26) and raised (24, 30) portions is approximately equal to the blanking level of the back porch;
retaining the normal position of the colour burst (28) relative to the leading edge of the sync pulses;
wherein the second portion (26) has a pulse width wide enough to overcome the limited bandwidth of a video recorder; and
a sufficient number of lines are selected to inhibit the making of acceptable video tape recordings therefrom.

2. A method as claimed in Claim 1, wherein said second portion (26) has a duration of 0.5 to 5 microseconds.

3. A method as claimed in Claim 1 or Claim 2, wherein said second portion (26) is at least 750 nanoseconds wide.

4. A method as claimed in any preceding claim, wherein said second portion (26) has a level of peak white or greater.

5. A method as claimed in any preceding claim, wherein said second portion (26) has a level of approximately 127 IRE units.

6. A method as claimed in any preceding claim, wherein the selected lines comprise the lines containing the colour burst (28) signal.

7. A method as claimed in any preceding claim, wherein the selected lines comprise the last 6 lines preceding the vertical sync pulse in each field.

8. A method as claimed in any preceding claim, wherein the colour burst (28) signal begins approximately 5.6 µsecs after the leading edge of the horizontal sync pulse.

9. A method as claimed in any preceding claim, wherein the colour burst signal (28) duration is approximately 2.25 µsecs.

10. A method as claimed in any preceding claim, wherein the sync duration on selected lines is approximately 3.0 µsecs.

11. A method as claimed in any preceding claim, wherein the sync level is reduced to approximately -30 IRE units.

12. A method as claimed in any preceding claim, wherein the selected lines form a cluster adjacent to a vertical blanking interval that form picture elements that are not displayed.

13. A method as claimed in any preceding claim, further including the step of reducing the level of each sync pulse.

14. A method as claimed in any preceding claim, wherein said selected lines are within a group thereof which occurs within no more than generally 20% of the video signal responsible for a field of a frame.

15. An apparatus for processing a video signal so as to inhibit the making of acceptable video tape recordings therefrom while at the same time producing a substantially normal picture on a television monitor/receiver, wherein video lines of the video signal have sync pulses (22) followed by back porch intervals, wherein the apparatus comprises:
a line counter (46) for selecting one or more lines within said video signal;
a logic circuit responsive to the line counter for:
narrowing the width of the sync pulses (22) on selected lines;
lowering the level of each of a first portion (24) and a third portion (30) of the back porch interval on said selected lines by less than approximately half of the colour burst amplitude;
significantly raising the level of a second portion (26) of the back porch interval;
wherein the average level of the video signal during the lowered (24, 30) and raised portions (26) is approximately equal to the blanking level of the back porch;
retaining the normal position of the colour burst (28) relative to the leading edge of said sync pulses,
wherein the second portion (26) is arranged to have a pulse width wide enough to overcome the limited video band width of a video recorder; and
the line counter (46) is arranged to select a sufficient number of lines to inhibit the making of acceptable video tape recording therefrom.

16. Apparatus as claimed in Claim 15, further comprising:
a sync separating circuit (44) for separating the sync pulses from the video signals.

17. Apparatus as claimed in Claim 15 or Claim 16, further comprising:
a sync stripping circuit (58) for removing the sync pulse of normal width from the video signal; and
an adder (60) for inserting the narrowed sync pulse (22) in place of the sync pulse of normal width.

## Patentansprüche

1. Verfahren zum Verarbeiten eines Videosignals, um so das Erstellen akzeptierbarer Videobandaufzeichnungen daraus zu erschweren, während gleichzeitig auf einem Fernsehmonitor/-empfänger ein im Wesentlichen normales Bild erzeugt wird, wobei das Videosignal Sync-Impulse enthält, auf die hintere Schwarzschulter-Intervalle folgen, wobei das Verfahren die Schritte beinhaltet:
Auswählen von einer oder mehreren Zeilen in dem Videosignal;
Schmälern der Breite des Sync-Impulses (22) auf den ausgewählten Zeilen;
Absenken des Pegels sowohl eines ersten Bereichs (24) als auch eines dritten Bereichs (30) des hinteren Schwarzschulter-Intervalls auf den ausgewählten Zeilen um weniger als etwa die Hälfte der Farbburst-Amplitude;
signifikantes Erhöhen des Pegels eines zweiten Bereichs (26) des hinteren Schwarzschulter-Intervalls auf den ausgewählten Zeilen;
wobei der durchschnittliche Pegel des Videosignals während der abgesenkten (26) und erhöhten (24, 30) Bereiche etwa gleich dem Austastpegel der Schwarzschulter ist;
Beibehalten der normalen Position des Farbburst (28) relativ zur vorderen Flanke des Sync-Impulses;
wobei der zweite Bereich (26) eine Impulsbreite hat, die breit genug ist, um die begrenzte Randbreite eines Videorecorders zu überwinden; und
eine ausreichende Anzahl von Zeilen ausgewählt wird, um das Erstellen akzeptierbarer Videobandaufzeichnungen daraus zu erschweren.

2. Verfahren nach Anspruch 1, bei dem der zweite Bereich (26) eine Dauer von 0,5 bis 5 Mikrosekunden hat.

3. Verfahren nach Anspruch 1 oder Anspruch 2, bei dem der zweite Bereich (26) mindestens 750 Nanosekunden breit ist.

4. Verfahren nach einem der vorhergehenden Ansprüche, bei dem der zweite Bereich (26) einen Peak-Pegel von Weiß oder größer hat.

5. Verfahren nach einem der vorhergehenden Ansprüche, bei dem der zweite Bereich (26) einen Pegel von etwa 127 IRE-Einheiten hat.

6. Verfahren nach einem der vorhergehenden Ansprüche, bei dem die ausgewählten Zeilen die Zeilen umfassen, die das Farbburst-Signal (28) enthalten.

7. Verfahren nach einem der vorhergehenden Ansprüche, bei dem die ausgewählten Zeilen die letzten 6 Zeilen umfassen, die dem vertikalen Sync-Impuls in jedem Halbbild vorausgehen.

8. Verfahren nach einem der vorhergehenden Ansprüche, bei dem das Farbburst-Signal (28) etwa 5,6 Mikrosekunden nach der vorderen Flanke des horizontalen Sync-Impulses beginnt.

9. Verfahren nach einem der vorhergehenden Ansprüche, bei dem die Dauer des Farbburst-Signals (28) etwa 2,25 Mikrosekunden beträgt.

10. Verfahren nach einem der vorhergehenden Ansprüche, bei dem die Sync-Dauer auf ausgewählten Zeilen etwa 3,0 Mikrosekunden beträgt.

11. Verfahren nach einem der vorhergehenden Ansprüche, bei dem der Sync-Pegel auf etwa -30 IRE-Einheiten reduziert wird.

12. Verfahren nach einem der vorhergehenden Ansprüche, bei dem die ausgewählten Zeilen einen Cluster in der Nähe eines vertikalen Austast-Intervalls bilden, die Bildelemente bilden, die nicht angezeigt werden.

13. Verfahren nach einem der vorhergehenden Ansprüche, außerdem mit dem Schritt des Reduzierens des Pegels von jedem Sync-Impuls.

14. Verfahren nach einem der vorhergehenden Ansprüche, bei dem sich die ausgewählten Zeilen in einer Gruppe davon befinden, die innerhalb von nicht mehr als allgemein 20% des Videosignals auftreten, das für ein Halbbild eines Vollbildes verantwortlich ist.

15. Vorrichtung zum Verarbeiten eines Videosignals, um so das Erstellen akzeptierbarer Videobandaufzeichnungen daraus zu erschweren, während gleichzeitig auf einem Fernsehmonitor/-empfänger ein im Wesentlichen normales Bild erzeugt wird, wobei Videozeilen des Videosignals Sync-Impulse (22) enthalten, auf die hintere Schwarzschulter-Intervalle folgen, wobei die Vorrichtung aufweist:
einen Zeilen-Zähler (46) zum Auswählen von einer oder mehreren Zeilen in dem Videosignal;
eine Logik-Schaltung, die auf den Zeilen-Zähler anspricht, um:
die Breite der Sync-Impulse (22) auf ausgewählten Zeilen zu schmälern;
den Pegel sowohl eines ersten Bereichs (24) als auch eines dritten Bereichs (30) des hinteren Schwarzschulter-Intervalls auf den ausgewählten Zeilen um weniger als etwa die Hälfte der Farbburst-Amplitude abzusenken;
den Pegel eines zweiten Bereichs (26) des hinteren Schwarzschulter-Intervalls signifikant zu erhöhen;
wobei der durchschnittliche Pegel des Videosignals während der abgesenkten (24, 30) und erhöhten (26) Bereiche etwa gleich dem Austastpegel der Schwarzschulter ist;
die normale Position des Farbburst (28) relativ zur vorderen Flanke des Sync-Impulses beizubehalten;
wobei der zweite Bereich (26) angeordnet ist, um eine Impulsbreite zu haben, die breit genug ist, um die begrenzte Videobandbreite eines Videorecorders zu überwinden; und
der Zeilen-Zähler (46) angeordnet ist, um eine ausreichende Anzahl von Zeilen auszuwählen, um das Erstellen akzeptierbarer Videobandaufzeichnungen daraus zu erschweren.

16. Vorrichtung nach Anspruch 15, außerdem mit:
einer Sync-Separationsschaltung (44), um die Sync-Impulse von den Videosignalen zu separieren.

17. Vorrichtung nach Anspruch 15 oder Anspruch 16, außerdem mit:
einer Sync-Abstreifschaltung (58), um die Sync-Impulse normaler Breite aus dem Videosignal zu entfernen; und
einem Addierer (60), um den geschmälerten Sync-Impuls (22) an der Stelle des Sync-Impulses normaler Breite einzusetzen.

## Revendications

1. Procédé pour traiter un signal vidéo de façon à interdire d'en faire des enregistrements acceptables sur bande vidéo tout en produisant en même temps une image pratiquement normale sur un écran/récepteur de télévision, dans lequel le signal vidéo comporte des impulsions de synchronisation suivies par des intervalles de palier arrière, le procédé comprenant les étapes consistant :
à choisir une ou plusieurs lignes à l'intérieur dudit signal vidéo ;
à rétrécir la largeur de l'impulsion (22) de synchronisation sur lesdites lignes choisies ;
à abaisser le niveau de chacune d'une première partie (24) et d'une troisième partie (30) de l'intervalle de palier arrière sur lesdites lignes choisies de moins qu'environ la moitié de l'amplitude de salve de chrominance ;
à relever sensiblement le niveau d'une deuxième partie (26) de l'intervalle de palier arrière sur lesdites lignes choisies ;
dans lequel le niveau moyen du signal vidéo pendant les parties abaissées (26) et relevées (24, 30) est à peu près égal au niveau de suppression du palier arrière ;
à maintenir la position normale de la salve (28) de chrominance par rapport au flanc avant des impulsions de synchronisation ;
dans lequel la deuxième partie (26) a une largeur d'impulsion assez large pour surmonter la largeur de bande limitée d'un enregistreur vidéo ; et
dans lequel on choisit un nombre suffisant de lignes pour interdire d'en faire des enregistrements acceptables sur bande vidéo.

2. Procédé selon la revendication 1, dans lequel ladite deuxième partie (26) a une durée de 0,5 à 5 microsecondes.

3. Procédé selon la revendication 1 ou la revendication 2, dans lequel ladite deuxième partie (26) est d'au moins 750 nanosecondes de large.

4. Procédé selon l'une quelconque des revendications précédentes, dans lequel ladite deuxième partie (26) a un niveau de crête de blanc ou plus grand.

5. Procédé selon l'une quelconque des revendications précédentes, dans lequel ladite deuxième partie (26) a un niveau d'à peu près 127 unités IRE (pour "Institute of Radio Engineers").

6. Procédé selon l'une quelconque des revendications précédentes, dans lequel les lignes choisies comprennent les lignes contenant le signal de salve (28) de chrominance.

7. Procédé selon l'une quelconque des revendications précédentes, dans lequel les lignes choisies comprennent les 6 dernières lignes précédant l'impulsion de synchronisation verticale de chaque trame.

8. Procédé selon l'une quelconque des revendications précédentes, dans lequel le signal de salve (28) de chrominance commence à peu près 5,6 µs après le flanc avant de l'impulsion de synchronisation horizontale.

9. Procédé selon l'une quelconque des revendications précédentes, dans lequel la durée du signal (28) de salve de chrominance est à peu près de 2,25 µs.

10. Procédé selon l'une quelconque des revendications précédentes, dans lequel la durée de synchronisation sur les lignes choisies est à peu près de 3,0 µs.

11. Procédé selon l'une quelconque des revendications précédentes, dans lequel le niveau de synchronisation est réduit à environ -30 unités IRE.

12. Procédé selon l'une quelconque des revendications précédentes, dans lequel les lignes choisies forment un groupement adjacent à un intervalle de suppression verticale qui forme des éléments d'image qui ne sont pas affichés.

13. Procédé selon l'une quelconque des revendications précédentes, incluant en outre l'étape de réduction du niveau de chaque impulsion de synchronisation.

14. Procédé selon l'une quelconque des revendications précédentes, dans lequel lesdites lignes choisies sont à l'intérieur d'un groupe de celles-ci qui apparaît dans pas plus que globalement 20 % du signal vidéo responsable d'une trame d'une image complète.

15. Dispositif pour traiter un signal vidéo de façon à interdire d'en faire des enregistrements acceptables sur bande vidéo tout en produisant en même temps une image pratiquement normale sur un écran/récepteur de télévision, dans lequel des lignes de vidéo du signal vidéo comportent des impulsions (22) de synchronisation suivies par des intervalles de palier arrière, dans lequel le dispositif comprend :
un compteur (46) de lignes destiné à choisir une ou plusieurs lignes à l'intérieur dudit signal vidéo ;
un circuit logique réagissant au compteur de lignes pour :
rétrécir la largeur des impulsions (22) de synchronisation sur les lignes choisies ;
abaisser le niveau de chacune d'une première partie (24) et d'une troisième partie (30) de l'intervalle de palier arrière sur lesdites lignes choisies de moins qu'environ la moitié de l'amplitude de salve de chrominance ;
relever sensiblement le niveau d'une deuxième partie (26) de l'intervalle de palier arrière ;
dans lequel le niveau moyen du signal vidéo pendant les parties abaissées (24, 30) et relevées (26) est à peu près égal au niveau de suppression du palier arrière ;
maintenir la position normale de la salve (28) de chrominance par rapport au flanc avant desdites impulsions de synchronisation ;
dans lequel la deuxième partie (26) est agencée pour avoir une largeur d'impulsion assez large pour surmonter la largeur de bande vidéo limitée d'un enregistreur vidéo ; et
dans lequel le compteur (46) de lignes est agencé pour choisir un nombre suffisant de lignes pour interdire d'en faire des enregistrements acceptables sur bande vidéo.

16. Dispositif selon la revendication 15, comprenant en outre un circuit (44) de séparation de synchronisation destiné à séparer, des signaux vidéo, les impulsions de synchronisation.

17. Dispositif selon la revendication 15 ou la revendication 16, comprenant en outre :
un circuit (58) d'enlèvement de synchronisation destiné à retirer, du signal vidéo, l'impulsion de synchronisation de largeur normale ; et
un additionneur (60) destiné à insérer l'impulsion (22) de synchronisation rétrécie à la place de l'impulsion de synchronisation de largeur normale.
